# EUROPEAN PATENT APPLICATION

(11) **EP 4 675 441 A1**
(43) Date of publication of application: **07.01.2026**
(21) Application number: 25170960.6
(22) Date of filing: 16.04.2025
(51) Int. Cl.: G06F 11/34, G06F 11/3668

(54) **MULTICORE INTERFERER GENERATION**

(30) Priority: 01.07.2024 US 202463666434 P; 09.04.2025 US 202519174230
(71) Applicant: General Electric Company, Cincinnati, Ohio 45215 (US)
(72) Inventor: ROPER, Simon, Evendale, 45215 (US); AMBROSE, Christopher, Evendale, 45215 (US)
(74) Representative: Openshaw & Co.

(57) **Abstract**

A system for multi-core interferer generation includes a processor and a memory including instructions which, when executed by the processor, cause the system at least to perform generating an interference test for one or more processor cores based upon one or more configuration files; introducing interference to the one or more processor cores to generate one or more interference test results; and filtering the one or more test results by evaluating performance data against one or more expected result hypotheses, each defining benchmark execution behavior and tolerance thresholds.

## Description

This application claims the benefit of U.S. Provisional Patent Application Serial No. 63/666,434, filed July 1, 2024, the entire contents of which are hereby incorporated by reference.

This application was developed with support from the HICLASS project, funded by Innovate UK.

### TECHNICAL FIELD

The present disclosure relates to multicore processors. Particularly, the present disclosure relates to multicore interferer generation.

### BACKGROUND

For certain applications (e.g. aviation operations, automotive operations and rail operations) processors may execute operations in a deterministic manner. For this reason, many functions are performed by single core processors.

Current processors typically include multiple processor cores. However, processing performed by multiple cores may result in non-deterministic operations. Accordingly, for aviation operations additional cores may be deactivated for processing.

### BRIEF DESCRIPTION OF THE DRAWINGS

Illustrative embodiments may take form in various components and arrangements of components. Illustrative embodiments are shown in the accompanying drawings, throughout which like reference numerals may indicate corresponding or similar parts in the various drawings. The drawings are only for purposes of illustrating the embodiments and are not to be construed as limiting the disclosure. Given the following enabling description of the drawings, the novel aspects of the present disclosure should become evident to a person of ordinary skill in the relevant art(s).
Figure 1 illustrates a system according to an exemplary embodiment;
Figure 2 is a flow diagram of a method of interferer generation, in accordance with one embodiment;
Figure 3 is a diagram of example test branches, in accordance with one embodiment;
Figure 4 is a diagram of an example test configuration, in accordance with one embodiment; and
Figure 5 illustrates a device in accordance with an exemplary embodiment.

### DETAILED DESCRIPTION

Prior to discussing the drawings of the present disclosure at length, several terms and concepts are covered in order to facilitate the detailed description of the exemplary embodiments depicted in the drawings. It is noted that however that these terms and concepts do not limit the disclosure and that one of ordinary skill in the relevant art(s) will readily recognize modifications and changes applicable to the following ancillary systems and/or concepts that do not limit the scope of the present teachings.

Multicore processors have many shared resources within a processor chip, which can be accessed by multiple central processing unit (CPU) cores. Access to these shared resources at the same time, from different cores can significantly increase the execution time of the software, resulting in the system failing to meet real-time requirements. In various embodiments, this increase in execution time, compared to what would be expected if a single core had independent access to the resource may be considered to be interference in a real time system.

For high design assurance level (DAL) aviation applications, determinism in the software is necessary, therefore the use of multicore processors in aviation is sometimes avoided. To characterize a processor specific software, tailored to the processor, potential shared resources and interference channels that will affect determinism is investigated.

Accordingly, although further detail is provided below, described herein is an automated framework that programmatically generates processor-specific interferers based on configurable parameters, enabling scalable, repeatable, and architecture-tailored testing of multicore determinism. This approach replaces time-consuming manual test development and supports more rapid and comprehensive processor characterization. Efficiency may be improved for engineers to conduct processor selections and due to the automation, increase the ability to use multicore processors for certain operations.

In various embodiments, engineers may accelerate their designs and find undocumented or hard to understand features within modern, complex multicore processors. The framework and particularly the automatic generation of interferers with different intensities and analysis based on hypothesis provides a significant time saving in acquiring this essential data. Because of the ease of investigations and of post processing analysis, coverage can be increased compared to manual techniques.

In order for a processor to perform useful work, it accesses external IO to obtain data and/or communicate results or actions. To use multiple cores within a multicore processor, data needs to be shared between the cores for them to perform useful work. For work to be deterministic, interference channels are identified and then either mitigated or characterized for their worst case impact. Accordingly, testing for interference may aid in determining if a multicore processor is performing in a deterministic manner.

Software that is tailored to that processor and is designed to exercise interference channels is performed by software components called interferers. Care needs to be taken to create such interferers so that they themselves are deterministic and repeatable. In various embodiments, these interferers are generated by the framework as configured for a specific target processor, to include configurable interference levels and ensure that they are guaranteed to be deterministic. In various embodiments, the generation may ensure there is no overhead from looping tests for repeated test execution.

In various embodiments, the interferers perform either read or write accesses to resources, including peripherals and memory regions such that access times can be understood.

In various embodiments, the automated framework ensures that the results are not influenced by the action of performing the test or extracting the results. As such, measurement noise is removed.

In various embodiments, the automated framework ensures that the target processor is in a known, good state before conducting the tests, such that results can be trusted.

In various embodiments, a user of the framework can configure the processor into a defined state, prior to running the test, through the test configuration settings. The required target code is automatically generated to configure the target to meet the test configuration, for example, enabling or disabling caches such that a single change to the test configuration is ensured, enabling identification of the impact of a specific test.

In various embodiments, the automated framework can be configured to perform a significant number of tests, into the thousands. The volume of data generated can exceed what is feasible to analyze manually. The framework automatically performs post-processing of results, including statistical outlier detection, execution time deviation analysis, and generation of plots such as histograms or time-based traces. These outputs enable users to quickly identify worst-case latencies, unexpected performance shifts, and violations of deterministic behavior.

In various embodiments, to further aid understanding of the results, draw attention to behavior that deviates from expectations and assist in identifying significant changes to the target processors configuration, hypotheses can be included in the test configuration and post processing such that the results are filtered to only show tests that failed to meet expected results.

In various embodiments, hypotheses may be configured to express expected timing bounds, execution consistency, or performance differences across cores. The framework automatically flags test cases that exceed configured tolerances, highlighting potential sources of interference or architectural anomalies. This hypothesis filtering improves signal-to-noise ratio in test analysis, especially when large test suites are executed.

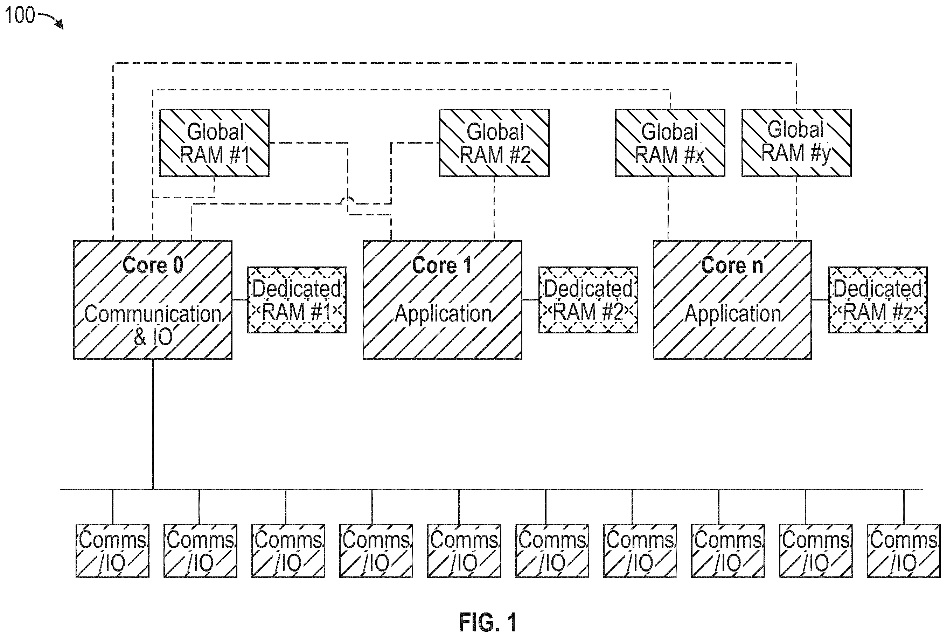

In accordance with the brief description, Figure 1 illustrates a system 100 according to an exemplary embodiment. As shown in Figure 1, the system 100 includes a number of processor cores (e.g., core 0, core 1, ..., core n). Each processor core includes associated dedicated memory (e.g., random access memory (RAM)). For example, core 0 (e.g., a first processor core) is associated with dedicated RAM#1, core 1 (e.g., a second processor core) is associated with dedicated RAM#2, and core n is associated with dedicated RAM#z.

Additionally, in various embodiments, each core is associated with a shared memory (e.g., global RAM). For example, core 0 is associated with global RAM #1, #2, #x and #y. Core 1 is associated with global RAM #1 and #2, and core n is associated with global RAM #x and #y. It should be noted that the associations depicted in Figure 1 are exemplary and that other associations may exist.

In various embodiments, core 0 may include the communications and IO operation, while cores 1-n may include applications or communications via an independent internal bus. Accordingly, core 0 may be in communication over a BUS to communication and IO peripherals, which is independent to any other core accessing different IO peripherals.

In various embodiments, the architecture depicted in Figure 1 is scalable to any multi-core processor, providing that there are sufficient independent memory peripherals on the device to accommodate all required cores, and simultaneous access to these separate memory peripherals can be achieved without incurring interference.

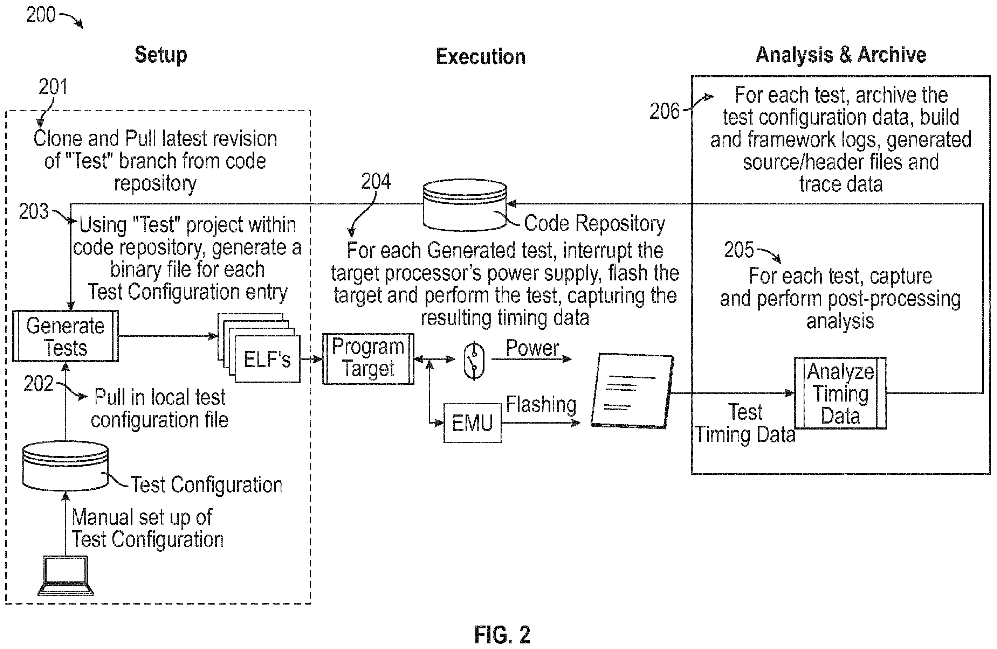

Figure 2 is a flow diagram of a method 200 of interferer generation, in accordance with one embodiment. At operation 201, a test branch (e.g., a software test project containing source and configuration files) is extracted from a database. In various embodiments, the test branch may be loaded and cloned from the latest revision of a test branch from a version control system (e.g., code repository).

At operation 202, a local test configuration of one or more configuration files is loaded that includes configuration parameters, for example, how many cores the target processor has and which processor cores to test or the intensity of the write operation relating to the interference tests to be performed. In various embodiments, the test configuration may be manually set up, such as by having a user input the configuration parameters.

At operation 203, interference test cases are generated. In various embodiments, a loadable binary file for each test configuration entry is generated utilizing, for example, a test project cloned from the code repository. In various embodiments, the interference test cases introduce various read and write operations, for example from processor cores to shared memory to determine if interference occurs (e.g., if there is an increase in execution time, as described above).

At operation 204, a power supply is interrupted (e.g., a target processor's power supply), the target memories are flashed with the generated binary files and resulting timing data is captured. In various embodiments, the program executed on the target processor performs tests, read or write to specific resources and in specific configuration as defined within the test configuration files. This may include introducing interference, thus testing the determinism of the target processor. For example, as described above in Figure 1, various processor cores may read and write to shared areas of memory in a different time frame. Accordingly, the timing data may include timestamps, cycle counts, or measured latencies associated with processor core read or write operations to shared or local memory resources to a shared area to determine whether or not the processor cores are deterministic such that, for example, they read and write in the time frames where it is expected they are to read and write.

At operation 205, post-processing analysis is performed for each test. For example, in various embodiments, the timing data, or other performance data for each processor core is captured and post processing analysis is performed. In various embodiments, the post processing analysis identifies outliers based on benchmark test configuration figures. For example, the outliers may include instances where a processor core performed a read or write in a time frame that was not expected for the processor to perform the read or write to that shared memory location. These deviations may indicate contention on shared memory buses, unanticipated cache interactions, or undocumented processor behaviors. Identifying such anomalies is important for qualifying processors for time-sensitive or safety-critical applications. For example, there may be features within the processor that are not clearly defined in the manufacturer's datasheets or user manuals, so the behavior may be different to what was expected by the end user with their specific configuration.

At operation 206, the test configuration data for each test case is archived, a framework log is built and stored, and source/header files and trace data is generated related to each test case. In various embodiments, the data (e.g., test results) may be filtered based upon a configured (e.g., expected result) hypothesis, determined at operation 205. This data is fed back to the version control system. In various embodiments, the data may be utilized to more effectively understand the detailed architecture of the target processor, from a timing perspective, allowing a user to gain greater understanding. For example, to consider the suitability of the processor for a deterministic application, or to design their software solution to be deterministic.

The method described above is exemplary and persons of skill in the art may appreciate that not all blocks may be performed, additional blocks, including additional operations may be performed, and/or the performance of the blocks in example method 200 may be performed in any order.

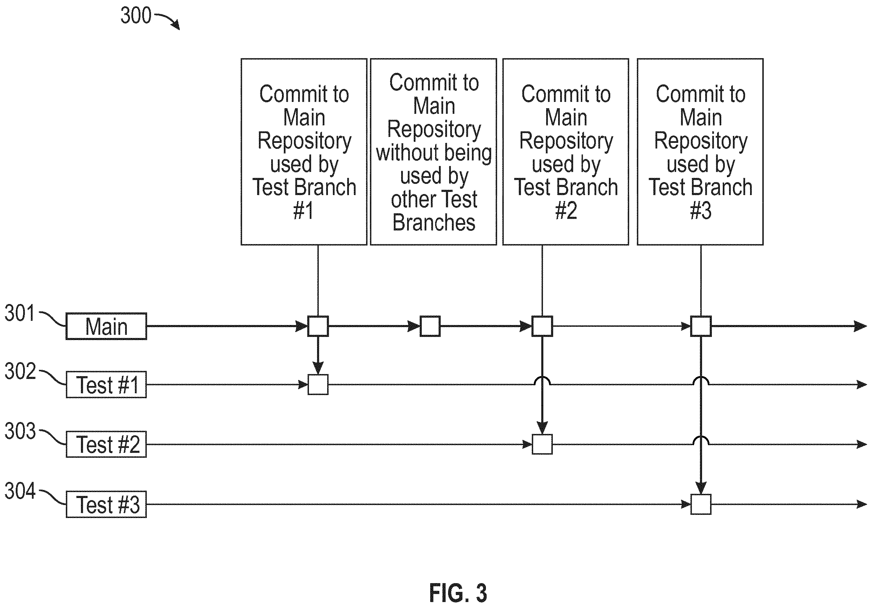

Figure 3 is a diagram of example test branches 300, in accordance with one embodiment. As shown in Figure 3, there is a main test branch 301, a first test branch 302 (Test #1), a second test branch 303 (Test #2) and a third test branch 304 (Test #3).

The main test branch 301 includes test information that may also be committed to additional test branches. For example, as shown in Figure 3, information (e.g., first data) is committed to a main repository for use by the first test branch 302, information (e.g., second data) is committed to a main repository for use by the second test branch 303, information is committed to a main repository for use by the third test branch 304, and information is committed to the main repository that is not used by any other test branch.

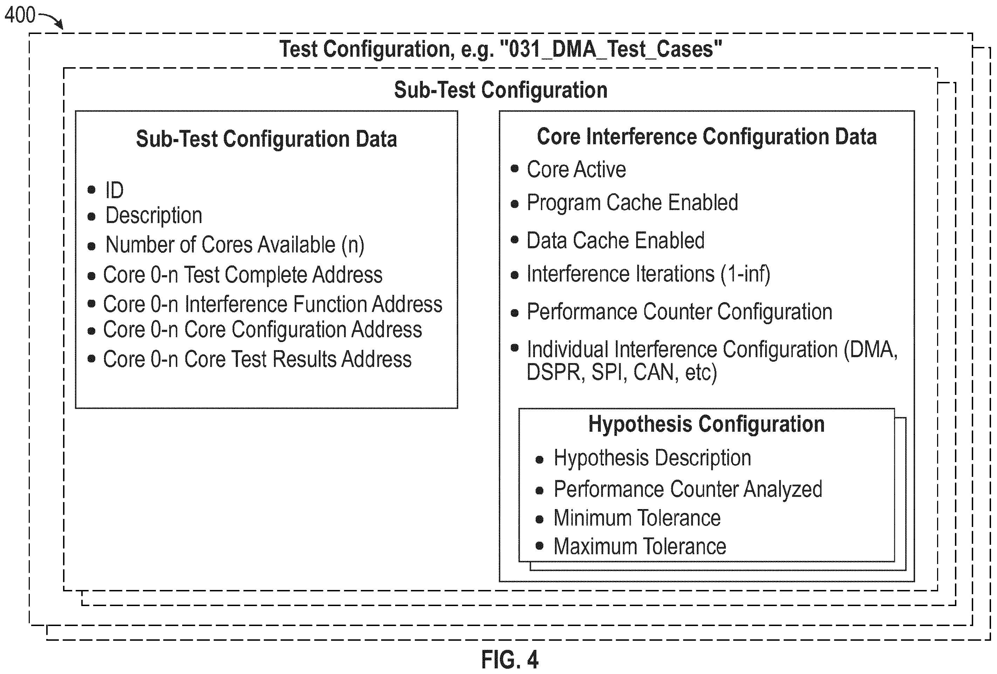

Figure 4 is a diagram of an example test configuration 400, in accordance with one embodiment. As shown in Figure 4, the test configuration may be, for example, an "031_DMA_Test_Cases" configuration.

In various embodiments, a sub-test configuration may include sub-test configuration data and core interference configuration data. In various embodiments, the sub-test configuration data may include an identifier (ID), description, number of cores available (n), core 0-n test complete address, core 0-n interference function address, core 0-n core configuration address, and core 0-n core test results address.

In various embodiments, the core interference configuration data may include core active, program cache enabled, data cache enabled, interference iterations (1-inf), performance counter configuration, individual interference configuration (DMA, DSPR, SPI, CAN, etc.). In various embodiments, the hypothesis configuration may include the hypothesis description, performance counter analyzed, minimum tolerance and maximum tolerance.

In various embodiments, each test branch may contain the software source that processor core performance is tested against. The branch may also include test configuration information that is specific to that testing branch. Each test branch could include configuration for X number of tests on a specific area, e.g., SRAM, Flash, or specific device peripherals.

In various embodiments, test #1 may used as a benchmark for performing the interference function on each core separately. Sub test 1, 2 and 3 show each core independently running the interference function. In various embodiments sub-tests (e.g., sub-tests 1 and 2) may have hypotheses included, with an expected increase in execution time (e.g., core 2 is expected to execute within 1% as core 1, whereas core 3 is expected to have up to a 20% increase in execution time due to the architecture of the tested processor.

In various embodiments, Test #2 is used to start testing for potential interference channels by executing the same function simultaneously. For test #2, cores are accessing their own independent scratchpad, but are reliant on flash access for program instructions. Cores 2 and 3 share flash on the tested processor, and thus simultaneous execution is expected to cause interference. In various embodiments, sub-tests (e.g., sub-tests 1 and 2) have hypotheses that both core 1 and core 2 or 3 include results within 0.1% of the benchmarking test, as interference is not expected. Sub test 3 may include hypotheses that an increase of 90-120% of execution time is expected from the benchmark values due to a shared interference channel (flash). Sub test 4 may include hypothesis akin to sub test 3, however core 1 is re-included to prove it still executes within the first (benchmark) tolerance of 0.1% due to a lack of interference channel.

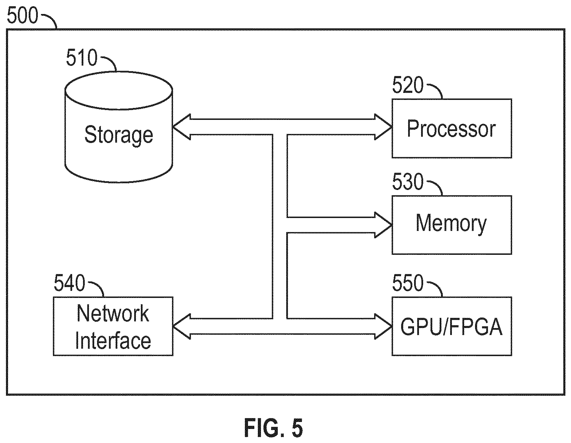

Figure 5 is a block diagram of a device 500 of the system of Figure 1, in accordance with one embodiment. Referring now to Figure 5, exemplary components in the device 500 in accordance with aspects of the present disclosure include, for example, a database 510, one or more processors 520 (e.g., multicore processor cores), at least one non-transitory memory 530 (e.g., dedicated or global RAM), and a network interface 540. In aspects, the device 500 may include a graphical processing unit (GPU) 550, which may be used for processing. Various components of device 500 may be utilized to carry out instructions to perform the operations described in blocks 201-206 of Figure 2. Further, device 500 may include communication circuitry capable of wired or wireless communication to receive data from other devices.

Database 510 can be located in storage. The term "storage" may refer to any device or material from which information may be capable of being accessed, reproduced, and/or held in an electromagnetic or optical form for access by a computer processor. Storage may be, for example, volatile memory such as RAM, non-volatile memory, which permanently holds digital data until purposely erased, such as flash memory, magnetic devices such as hard disk drives, and optical media such as a CD, DVD, Blu-ray Disc^{™}, or the like.

In various aspects, data may be stored on device 500, including, for example, user preferences, historical data, and/or other data. The data can be stored in database 510 and sent via the system bus to processor 520.

As described above, processor 520 may execute various processes based on instructions that can be stored in the memory 530 and utilizing the data from database 510. The illustration of Figure 5 is exemplary, and persons skilled in the art will be understood by other components that may exist in device 500. Such other components are not illustrated in Figure 5 for clarity of illustration.

The aspects disclosed herein are examples of the disclosure and may be embodied in various forms. For instance, although certain aspects herein are described as separate aspects, each of the aspects herein may be combined with one or more of the other aspects herein. Specific structural and functional details disclosed herein are not to be interpreted as limiting, but as a basis for the claims and as a representative basis for teaching one skilled in the art to variously employ this disclosure in virtually any appropriately detailed structure.

The phrases "in an aspect," "in aspects," "in various aspects," "in some aspects," or "in other aspects" may each refer to one or more of the same or different aspects in accordance with this disclosure.

Approximating language, as used herein throughout the specification and claims, is applied to modify any quantitative representation that could permissibly vary without resulting in a change in the basic function to which it is related. Accordingly, a value modified by a term or terms, such as "about," "approximately," "generally," and "substantially" is not to be limited to the precise value specified. In at least some instances, the approximating language may correspond to the precision of an instrument for measuring the value, or the precision of the methods or the machines for constructing the components and/or the systems or manufacturing the components and/or the systems. For example, the approximating language may refer to being within a one, two, four, ten, fifteen, or twenty percent margin in either individual values, range(s) of values and/or endpoints defining range(s) of values.

Those skilled in the relevant art(s) will appreciate that various adaptations and modifications of the embodiments described above can be configured without departing from the scope and spirit of the disclosure. Therefore, it is to be understood that, within the scope of the appended claims, the teachings featured herein may be practiced other than as specifically described herein.

Further aspects of the present disclosure are provided by the subject matter of the following clauses.

A system for multi-core interferer generation includes a processor and a memory including instructions which, when executed by the processor, cause the system at least to perform generating an interference test for one or more processor cores based upon one or more configuration files; introducing interference to the one or more processor cores to generate one or more interference test results; and filtering the one or more test results by evaluating performance data against one or more expected result hypotheses, each defining benchmark execution behavior and tolerance thresholds.

The system according to any preceding clause, wherein the interference test includes a plurality of test branches.

The system according to any preceding clause, wherein the plurality of test branches include a main test branch, a first test branch and a second test branch.

The system according to any preceding clause, wherein a first test data is stored in a main repository for use by the first test branch.

The system according to any preceding clause, wherein a second test data is stored in the main test branch repository for use by the second test branch.

The system according to any preceding clause, wherein the expected results hypothesis include one or more benchmarks representing baseline execution performance of processor cores under minimal or no interference conditions.

The system according to any preceding clause, wherein the expected results hypothesis include a first processor core executing the interference function in a first time period faster than a second processor core.

The system according to any preceding clause, wherein the expected results hypothesis include the second processor core executing the interference function within a first tolerance level of the one or more benchmarks.

The system according to any preceding clause, wherein the expected results hypothesis include a first processor core executing the interference function in a second time period faster than a third processor core.

The system according to any preceding clause, wherein the expected results hypothesis include the third processor core executing the interference function within a second tolerance level of the one or more benchmarks.

The system according to any preceding clause, wherein various processor cores read and write to shared areas of memory in a different time frame.

The system according to any preceding clause, wherein the timing data includes time frames where a processor core performed a read or write operation to a shared area to determine whether or not the processor cores are deterministic.

The system according to any preceding clause, wherein a processor cores are determined to be deterministic where they read and write in the time frames where it is expected they are to read and write.

A processor-implemented method for multi-core deterministic processing includes generating an interference test for one or more processor cores based upon one or more configuration files; introducing interference to the one or more processor cores to generate one or more interference test results; and filtering the one or more test results by evaluating performance data against one or more expected result hypotheses, each defining benchmark execution behavior and tolerance thresholds.

The processor-implemented method according to any preceding clause, wherein the interference test includes a plurality of test branches.

The processor-implemented method according to any preceding clause, wherein the plurality of test branches include a main test branch, a first test branch and a second test branch.

The processor-implemented method according to any preceding clause, wherein a first test data is stored in a main test branch repository for use by the first test branch.

The processor-implemented method according to any preceding clause, wherein a second test data is stored in the main repository for use by the second test branch.

The processor-implemented method according to any preceding clause, wherein the expected results hypothesis include one or more benchmarks for the one or more processor cores performing an interference function.

The processor-implemented method according to any preceding clause, wherein the expected results hypothesis include a first processor core executing the interference function in a first time period faster than a second processor core.

The processor-implemented method according to any preceding clause, wherein the expected results hypothesis include the second processor core executing the interference function within a first tolerance level of the one or more benchmarks.

The processor-implemented method according to any preceding clause, wherein the expected results hypothesis include a first processor core executing the interference function in a second time period faster than a third processor core.

The processor-implemented method according to any preceding clause, wherein the expected results hypothesis include the third processor core executing the interference function within a second tolerance level of the one or more benchmarks.

The processor-implemented method according to any preceding clause, wherein various processor cores read and write to shared areas of memory in a different time frame.

The processor-implemented method according to any preceding clause, wherein the timing data includes time frames where a processor core performed a read or write operation to a shared area to determine whether or not the processor cores are deterministic.

The processor-implemented method according to any preceding clause, wherein a processor cores are determined to be deterministic where they read and write in the time frames where it is expected they are to read and write.

It should be understood that the description herein is only illustrative of this disclosure. Various alternatives and modifications can be devised by those skilled in the art without departing from the disclosure. Accordingly, this disclosure is intended to embrace all such alternatives, modifications, and variances. The aspects described are presented only to demonstrate certain examples of the disclosure. Other elements, steps, methods, and techniques that are insubstantially different from those described above and/or in the appended claims are also intended to be within the scope of the disclosure.

## Claims

1. A system for multi-core interferer generation, the system comprising:
a processor;
a memory including instructions which, when executed by the processor, cause the system at least to perform:
generating an interference test for one or more processor cores based upon one or more configuration files;
introducing interference to the one or more processor cores to generate one or more interference test results; and
filtering the one or more test results by evaluating performance data against one or more expected result hypotheses, each defining benchmark execution behavior and tolerance thresholds.

2. The system of claim 1, wherein the interference test includes a plurality of test branches.

3. The system of claim 2, wherein the plurality of test branches include a main test branch, a first test branch and a second test branch.

4. The system of claim 3, wherein a first test data is stored in a main repository for use by the first test branch.

5. The system of claim 3 or 4, wherein a second test data is stored in the main test branch repository for use by the second test branch.

6. The system of any preceding claim, wherein the expected result hypothesis include one or more benchmarks representing baseline execution performance of processor cores under minimal or no interference conditions.

7. The system of claim 6, wherein the expected result hypothesis include a first processor core executing the interference function in a first time period faster than a second processor core.

8. The system of claim 7, wherein the expected result hypothesis include the second processor core executing the interference function within a first tolerance level of the one or more benchmarks.

9. The system of claim 6, wherein the expected result hypothesis include a first processor core executing the interference function in a second time period faster than a third processor core.

10. The system of claim 9, wherein the expected result hypothesis include the third processor core executing the interference function within a second tolerance level of the one or more benchmarks.

11. A processor-implemented method for multi-core deterministic processing, the method comprising:
generating an interference test for one or more processor cores based upon one or more configuration files;
introducing interference to the one or more processor cores to generate one or more interference test results; and
filtering the one or more test results by evaluating performance data against one or more expected result hypotheses, each defining benchmark execution behavior and tolerance thresholds.

12. The processor-implemented method of claim 11, wherein the interference test includes a plurality of test branches, optionally including a main test branch, a first test branch and a second test branch.

13. The processor-implemented method of claim 11 or 12, wherein the expected result hypothesis include one or more benchmarks for the one or more processor cores performing an interference function.

14. The processor-implemented method of claim 13, wherein the expected result hypothesis include a first processor core executing the interference function in a first time period faster than a second processor core.

15. The processor-implemented method of claim 13, wherein the expected result hypothesis include a first processor core executing the interference function in a second time period faster than a third processor core.
